(19) **Europäisches Patentamt / European Patent Office / Office européen des brevets**

(11)  **EP 3 229 366 B1**

(12)  **FASCICULE DE BREVET EUROPEEN**

(45) Date de publication et mention de la délivrance du brevet:
**16.05.2018 Bulletin 2018/20**

(51) Int Cl.:
*H02P 21/00* $^{(2016.01)}$    *H02P 23/00* $^{(2016.01)}$
*H02P 21/14* $^{(2016.01)}$    *H02P 27/08* $^{(2006.01)}$

(21) Numéro de dépôt: **17158695.1**

(22) Date de dépôt: **01.03.2017**

(54) **PROCÉDÉ DE COMMANDE D'UN MOTEUR ÉLECTRIQUE ASYNCHRONE**

STEUERUNGSVERFAHREN EINES ASYNCHRONEN ELEKTROMOTORS

METHOD FOR CONTROLLING AN ASYNCHRONOUS ELECTRICAL MOTOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.04.2016 FR 1652955**

(43) Date de publication de la demande:
**11.10.2017 Bulletin 2017/41**

(73) Titulaire: **Schneider Toshiba Inverter Europe SAS 27120 Pacy sur Eure (FR)**

(72) Inventeurs:
• **MALRAIT, François**
  **27120 Jouy sur Eure (FR)**
• **JEBAI, Al Kassem**
  **27120 Vernon (FR)**
• **DEVOS, Thomas**
  **78955 Carrières sous Poissy (FR)**

(74) Mandataire: **Dufresne, Thierry**
  **Schneider Electric Industries SAS**
  **Service Propriété Industrielle**
  **35 rue Joseph Monier - CS 30323**
  **92506 Rueil-Malmaison Cedex (FR)**

(56) Documents cités:
EP-A1- 2 804 310       US-A- 5 204 607
US-A1- 2012 068 639    US-B2- 7 221 117

**Description**

**Domaine technique de l'invention**

La présente invention se rapporte à un procédé de commande d'un moteur électrique de type asynchrone et à un système de commande mettant en oeuvre ledit procédé pour commander ledit moteur électrique.

**Etat de la technique**

Dans un schéma de commande classique d'un moteur électrique de type asynchrone, une loi de commande est exécutée par une unité de traitement et reçoit en entrée une référence de vitesse (ou référence de pulsation) et une référence de flux. En fonction de ces deux informations et des mesures des grandeurs sur le moteur (courant et/ou vitesse), l'unité de traitement détermine une référence de tension à appliquer au moteur électrique. A partir de cette référence de tension, l'unité de traitement détermine les tensions de commande à appliquer sur chaque phase de sortie connectée au moteur. De manière connue, ces tensions sont appliquées au moteur en utilisant une architecture d'électronique de puissance.

En règle générale, cette architecture est connectée à un réseau électrique fournissant une tension électrique alternative. L'architecture comporte un redresseur AC/DC, un bus continu d'alimentation connecté au redresseur et un onduleur de tension de type DC/AC. L'onduleur de tension est par exemple commandé en Modulation de Largeur d'Impulsions. Un tel onduleur délivre au moteur une suite d'impulsions d'amplitude fixe, positive ou négative et modulées en largeur, selon une loi de commande en tension.

La tension maximale délivrée au moteur électrique ne peut pas dépasser la tension disponible au niveau du bus continu d'alimentation.

Dans ce schéma de commande, il est connu que lorsque qu'on impose en entrée une référence de vitesse supérieure à un certain seuil (proche en général de la vitesse nominale du moteur) et une référence de flux constante, la tension calculée en fonction de ces références peut être incompatible avec la tension disponible sur le réseau ou avec une limitation de tension choisie pour le moteur à alimenter. Dans une telle situation, pour pouvoir appliquer cette référence de vitesse au moteur électrique et ainsi obtenir une tension que l'onduleur peut générer, l'unité de traitement doit nécessairement réduire la valeur du flux et ainsi entrer dans une zone de "défluxage".

Ce problème a d'abord été abordé dans le brevet US 5,204,607 qui propose de corriger la référence de flux lorsque la référence de tension déterminée devient supérieure à la tension que peut fournir l'onduleur. Pour cela, le système effectue une comparaison entre la référence de tension et la tension maximale que peut fournir l'onduleur. La différence calculée est utilisée pour déterminer une valeur de correction à appliquer à la référence de flux. La référence de flux est corrigée tant que la référence de tension pour l'onduleur est inférieure ou égale à la tension maximale que peut fournir l'onduleur. Ainsi la référence de flux et le flux réel sont toujours en accord ce qui évite le défluxage. Cependant dans ce système, les références de courant ne sont pas corrigées dynamiquement ce qui ne permet pas de lui garantir les mêmes propriétés de stabilité dans la zone de limitation de tension et en dehors de cette zone.

Le brevet US7,221,117 propose une autre solution qui utilise un modèle du moteur électrique et qui permet d'adapter le flux en limitation de tension et ainsi d'assurer la stabilité du contrôle du moteur électrique en limitation de tension. Cependant, dans cette dernière méthode, le fait d'atteindre la limitation de tension lors du défluxage entraîne des perturbations dynamiques transitoires sur les grandeurs mécaniques du moteur électrique et notamment sur le couple du moteur électrique.

Le but de l'invention est donc de proposer un procédé de commande mis en oeuvre dans l'unité de traitement, qui permet de résoudre les problèmes de perturbations dynamiques liées au passage en région "défluxée".

**Exposé de l'invention**

Ce but est atteint par un procédé de commande d'un moteur électrique asynchrone, mis en oeuvre dans une unité de traitement, ladite unité de traitement étant associée à un convertisseur de puissance connecté par des phases de sortie audit moteur électrique et agencée pour exécuter une loi de commande en vue de déterminer des tensions à appliquer audit moteur électrique à partir d'une référence de vitesse et d'une référence de flux appliquées en entrée, ledit procédé comportant une phase d'identification qui consiste à :

- Générer une trajectoire de vitesse en entrée de la loi de commande de manière à faire prendre à la référence de vitesse plusieurs valeurs successives déterminées,
- Pour chaque valeur prise par la référence de vitesse, déterminer la tension aux bornes du moteur électrique,
- Pour chaque valeur prise par la référence de vitesse, déterminer et mémoriser la valeur de flux pour laquelle la tension aux bornes du moteur électrique est égale à une valeur seuil déterminée.

Selon une particularité, la trajectoire de vitesse suit un profil en escalier, dont chaque échelon correspond à une valeur distincte à appliquer.

Selon un premier mode de réalisation, pour chaque valeur prise par la référence de vitesse, le procédé consiste à :

- Faire varier la référence de flux entre une valeur minimale et une valeur maximale,
- Déterminer la courbe de variation de la tension du moteur obtenue lors de la variation de la référence de flux,
- Déterminer la valeur de référence de flux pour laquelle la tension du moteur est égale à ladite valeur seuil.

Dans ce premier mode de réalisation, le procédé consiste à déterminer l'intersection entre la constante formée par ladite valeur seuil et la courbe de variation de la tension du moteur obtenue lors de la variation de la référence de flux à une référence de vitesse donnée.

Selon un deuxième mode de réalisation, pour chaque valeur prise par la référence de vitesse, il consiste à :

- Fixer la référence de flux à une valeur déterminée,
- Déterminer la tension du moteur obtenue en fonction de ladite valeur de la référence de vitesse et de ladite de référence de flux appliquées en entrée,
- Déterminer la différence de tension entre la tension du moteur obtenue et ladite valeur seuil,
- Corriger la valeur de référence de flux appliquée en entrée jusqu'à ce que la tension du moteur soit égale à ladite valeur seuil,
- Mémoriser la valeur de référence de flux obtenue lorsque la tension du moteur est égale à ladite valeur seuil.

Selon une autre particularité de l'invention, le procédé comporte une phase d'exploitation qui suit la phase d'identification et dans laquelle chaque valeur de flux mémorisée en liaison avec chaque référence de vitesse lors de la phase d'identification peut être employée pour adapter le flux en temps réel lors de l'exécution de la loi de commande du moteur électrique.

L'invention concerne également un système de commande d'un moteur électrique comprenant une unité de traitement, ladite unité de traitement étant associée à un convertisseur de puissance connecté par des phases de sortie audit moteur électrique et agencé pour appliquer des tensions variables audit moteur électrique en exécutant une loi de commande, ledit système, lors d'une phase d'identification, exécute:

- Un module de génération d'une trajectoire de vitesse en entrée de la loi de commande de manière à faire prendre à la référence de vitesse plusieurs valeurs successives déterminées,
- Pour chaque valeur prise par la référence de vitesse, un module de détermination de la tension aux bornes du moteur électrique,
- Pour chaque valeur prise par la référence de vitesse, un module de détermination de la valeur de flux pour laquelle la tension aux bornes du moteur électrique est égale à une valeur seuil déterminée et un module de mémorisation de ladite valeur de flux déterminée.

Selon une particularité du système, la trajectoire de vitesse générée par le module de génération de trajectoire suit un profil en escalier, dont chaque échelon correspond à une valeur distincte à appliquer.

Selon un premier mode de réalisation, pour chaque valeur prise par la vitesse de référence, le système exécute :

- Un module de génération d'une trajectoire de référence de flux entre une valeur minimale et une valeur maximale,
- Un module de détermination d'une courbe de variation de la tension du moteur lors de la variation de la référence de flux,
- Un module de détermination de la valeur de référence du flux pour laquelle la tension du moteur est égale à ladite valeur seuil.

Selon une particularité de ce premier mode de réalisation, ledit module de détermination de la valeur de référence de flux est agencé pour déterminer l'intersection entre la constante formée par ladite valeur seuil et la courbe de variation de la tension du moteur obtenue lors de la variation de la référence de flux à une référence de vitesse donnée.

Selon un deuxième mode de réalisation, pour chaque valeur prise par la référence de vitesse, le système fixe la référence de flux à une valeur déterminée et exécute :

- Un module de détermination de la tension du moteur obtenue en fonction de ladite valeur de référence de vitesse et de ladite valeur de référence de flux appliquées en entrée,
- Un module de détermination de la différence de tension entre la tension du moteur obtenue et ladite valeur seuil,

- Un module pour déterminer une correction à appliquer à la valeur de la référence de flux appliquée en entrée jusqu'à ce que la tension du moteur soit égale à ladite valeur seuil,
- Un module de mémorisation de la valeur de référence de flux obtenue lorsque la tension du moteur est égale à ladite valeur seuil.

Selon une particularité, lors d'une phase d'exploitation qui suit la phase d'identification, il est agencé pour adapter le flux en temps réel lors de l'exécution de la loi de commande du moteur électrique à partir des valeurs de flux mémorisées en liaison avec les références de vitesse lors de la phase d'identification.

## Brève description des figures

D'autres caractéristiques et avantages vont apparaître dans la description détaillée qui suit faite en regard des dessins annexés dans lesquels :

- La figure 1 représente le schéma d'un variateur de vitesse classique incluant le système de commande de l'invention.
- La figure 2 représente un synoptique illustrant le principe de fonctionnement du procédé de commande de l'invention, selon un premier mode de réalisation.
- Les figures 3A à 3D représentent des courbes illustrant le principe de fonctionnement de l'invention selon le premier mode de réalisation.
- La figure 4 représente un synoptique illustrant le principe de fonctionnement du procédé de commande de l'invention, selon un deuxième mode de réalisation.
- La figure 5 représente une courbe reliant la référence de flux à la référence de vitesse à une tension maximale.

## Description détaillée d'au moins un mode de réalisation

L'invention décrite ci-dessous s'applique à la commande d'un moteur asynchrone (à induction), préférentiellement à alimentation triphasée. Elle est mise en oeuvre dans un schéma de commande classique de type vectoriel ou scalaire, en boucle ouverte, c'est-à-dire sans retour d'une mesure de vitesse au niveau du moteur électrique, ou en boucle fermée, c'est-à-dire avec retour d'une mesure de vitesse au niveau du moteur électrique.

Dans la suite de la description, on entend par tension du moteur $U_m$, l'amplitude du vecteur de la référence de tension ayant les deux composantes $u_{d\_ref}$ et $u_{q\_ref}$. Par ailleurs, il est connu de passer du repère tournant (d,q) au repère triphasé a,b,c qui correspond au repère physique du moteur électrique commandé. Ainsi, on a également:

$$u_a = U_m \cos(\theta)$$

$$u_b = U_m \cos(\theta - \frac{2\pi}{3})$$

$$u_c = U_m \cos(\theta + \frac{2\pi}{3})$$

Avec $u_a, u_b, u_c$ les valeurs instantanées des tensions appliquées sur chaque phase de sortie et $\theta$ l'angle de déphasage appliqué entre tensions appliquées entre les phases de sortie.

Le procédé de commande de l'invention est mis en oeuvre dans un système de commande qui comporte une unité de traitement UC. L'unité de traitement UC comporte au moins un microprocesseur et une mémoire. Ce système de commande est associé à un variateur de vitesse destiné à la commande d'un moteur électrique. Il pourra notamment être intégré audit variateur de vitesse.

De manière connue, le variateur de vitesse comporte en règle générale :

- Des phases d'entrée R, S, T connectées à un réseau électrique fournissant une tension alternative.
- Un redresseur AC/DC 10, tel que par exemple un pont de diodes, destiné à transformer la tension alternative fournie par le réseau en une tension continue.
- Un bus continu d'alimentation connecté en sortie du redresseur et comportant deux lignes d'alimentation L1, L2 entre lesquelles est appliquée la tension continue.
- Au moins un condensateur de bus Cbus connecté entre les deux lignes d'alimentation du bus et destiné à maintenir la tension continue à une valeur constante.

- Un onduleur DC/AC 11 connecté au bus continu d'alimentation et comprenant plusieurs transistors de puissance, par exemple de type IGBT, commandés par l'unité de traitement de manière à appliquer les tensions requises sur des phases de sortie connectées au moteur électrique. La commande de l'onduleur 11 est par exemple réalisée par des techniques traditionnelles de type MLI (Modulation à Largeur d'Impulsion) ou CDC (Contrôle Direct de Couple). Une loi de commande exécutée par l'unité de traitement UC permet de déterminer les tensions à appliquer sur les phases de sortie.
- Des phases de sortie a,b,c destinées à être connectées au moteur électrique M à commander.

De manière non limitative, l'invention sera décrite pour une loi de commande de type scalaire en U/F et en boucle ouverte. Il faut comprendre que la méthode décrite ci-dessous sera identique quelle que soit la loi de commande employée.

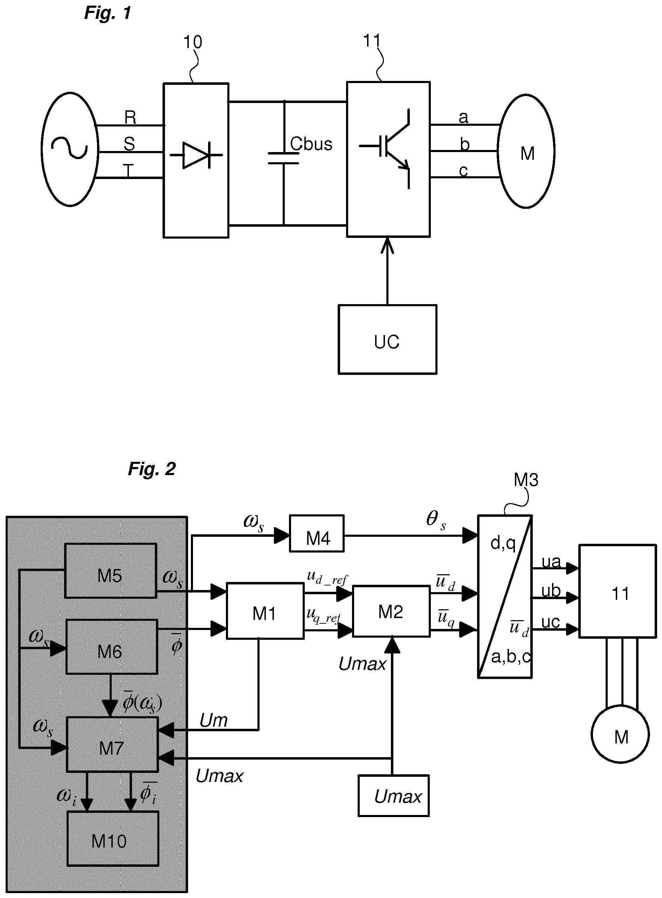

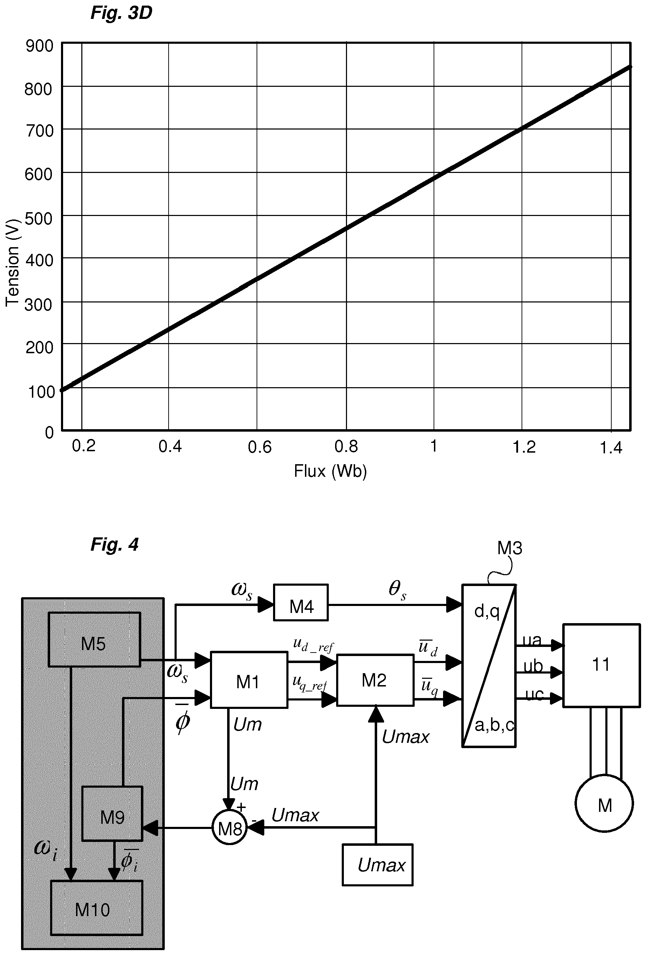

De manière connue en référence aux figures 2 et 4, une loi de commande scalaire en U/F classique, exécutée par l'unité de traitement pour la commande d'un moteur électrique asynchrone en boucle ouverte, comporte les caractéristiques principales suivantes :

- Une référence de vitesse, qui correspond à la pulsation électrique $\omega_s$ des courants à injecter au stator, et une référence de flux $\overline{\phi}$ sont appliquées en entrée.

- L'unité de traitement UC, à partir d'un module M1 calculateur de tension, détermine une référence de tension directe $u_{d\_ref}$ et une référence de tension en quadrature $u_{q\_ref}$.

- A partir des deux composantes de tension, l'unité de traitement UC exécute un module M2 de limitation de tension à une valeur $U_{max}$ déterminée, fonction de la tension limite $U_{lim}$ que peut fournir le variateur de vitesse au moteur électrique M. On aura par exemple :

$$U_{max} = 0.95 \times U_{lim}$$

- En sortie du module M2 de limitation, on obtient une référence de tension directe limitée $\overline{u}_d$ et une référence de tension en quadrature limitée $\overline{u}_q$ sur la base desquelles les tensions à appliquer en sortie sont déterminées.

- A partir des deux tensions, un module M3 applique une transformation de Park pour déterminer les tensions $u_a, u_b, u_c$ à appliquer sur chaque phase de sortie.

- L'unité de traitement exécute également un module M4 de détermination de l'angle de déphasage $\theta_s$ à appliquer entre les tensions $u_a, u_b, u_c$ à appliquer au moteur à partir de la pulsation $\omega_s$ introduite en entrée.

D'autres modules peuvent bien entendu être mis en oeuvre par l'unité de traitement mais ceux-ci ne seront pas détaillées dans la présente demande.

Cette loi de commande est mise en oeuvre lors d'une phase d'exploitation, c'est-à-dire pendant le fonctionnement normal du moteur électrique M commandé par le variateur de vitesse.

L'invention concerne un procédé de commande qui comporte une phase d'identification réalisée préférentiellement préalablement à ladite phase d'exploitation. Cette phase d'identification vise à déterminer, pour différentes pulsations $\omega_s$ appliquées en entrée, les valeurs de flux pour lesquelles la tension du moteur est égale à une valeur seuil déterminée. Cette valeur seuil sera préférentiellement liée à la valeur $U_{lim}$ de la tension limite que peut fournir le variateur de vitesse. Cette valeur seuil, désignée $U_{max}$, est choisie inférieure à la valeur $U_{lim}$ de tension limite. Cette valeur seuil est préférentiellement mémorisée par l'unité de traitement et est par exemple égale à :

$$U_{max} = 0.95 \times U_{lim}$$

Lors du fonctionnement normal du moteur électrique M, les valeurs de flux identifiées vont permettre d'adapter en temps réel, si nécessaire, la valeur de la référence de flux $\overline{\phi}$ et ainsi éviter une limitation de tension.

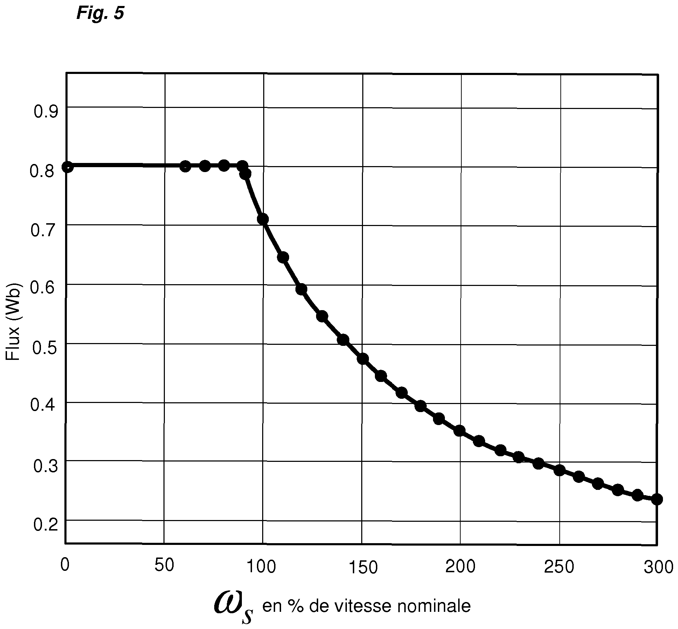

Autrement dit, il s'agit de construire un profil de courbe reliant l'amplitude de la référence de flux à la pulsation $\omega_s$ à une tension de seuil déterminée, par exemple égale à la valeur seuil définie ci-dessus. Un tel profil est représenté en figure 5. En fonctionnement normal, si le flux du moteur électrique reste à une amplitude qui est située au-dessous de cette courbe, alors le moteur électrique M n'atteint pas la limitation de tension.

La démonstration qui suit permet de montrer qu'une variation du flux a une incidence sur la tension du moteur.

Les équations électriques d'un moteur asynchrone dans le repère tournant d,q, selon un modèle standard, sont les suivantes (notation sous forme complexe) :

$$\begin{cases} \dfrac{d}{dt}\phi = -[T_r^{-1} + j(\omega_s - \omega_r)]\phi + R_{req}i_s \\ L_f \dfrac{di_s}{dt} = -\left(R_s + R_{req} + jL_f\omega_s\right)i_s + (T_r^{-1} - j\omega_r)\phi + u_s \end{cases}$$

Avec : $R_{req} = R_r \frac{L_m^2}{L_r^2}, \quad T_r = \frac{L_r}{R_r}, \; L_f = L_s - \frac{L_m^2}{L_r} \; et \; \Phi = \frac{L_m}{L_r}\Phi_r.$ Les paramètres électriques sont :

- $R_s$: résistance statorique;
- $R_r$: résistance rotorique;
- $L_s$: inductance statorique;
- $L_r$: inductance rotorique
- $L_m$: inductance mutuelle entre le stator et le rotor.

Les variables sont :

- $\Phi_r$: flux rotorique.
- $i_s$ : courant statorique.
- $u_s$: tension du moteur.
- $\omega_s$ : pulsation électrique.
- $\omega_r$ : vitesse mécanique multiplié par le nombre de pairs de pôle.

Comme déjà expliqué, la tension fournie par le variateur de vitesse au moteur électrique ne peut pas dépasser une valeur limite $U_{lim}$, ainsi l'amplitude de la tension du moteur est soumise à la contrainte suivante :

$$|u_s| < U_{\lim}$$

A l'équilibre, la tension du moteur est :

$$u_s = \left(R_s + jL_f\omega_s\right)i_s + j\omega_s\phi$$

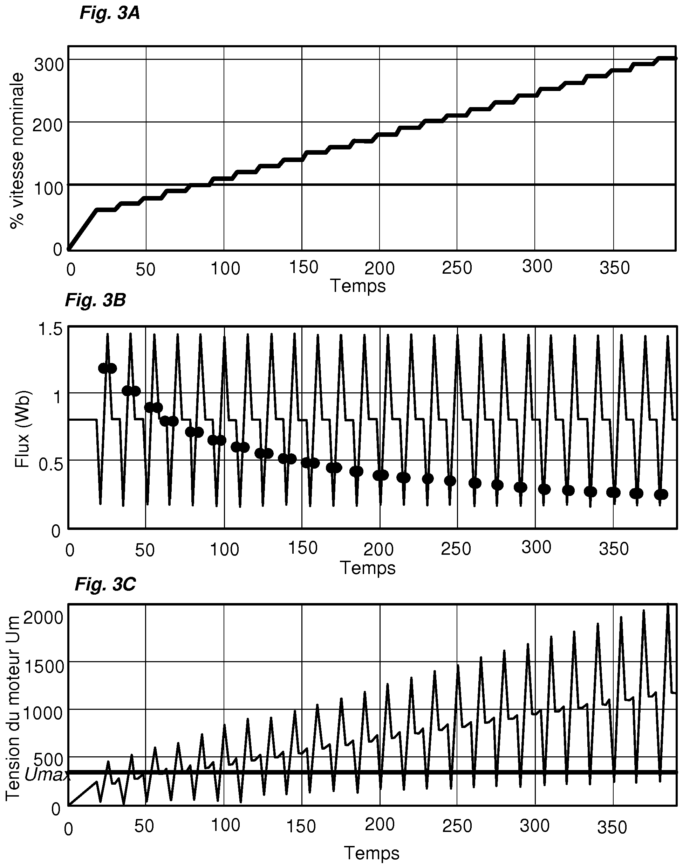

L'amplitude de la tension du moteur $U_m = |u_s|$ augmente avec le module du flux $|\phi|$ ou la pulsation $\omega_s$. La figure 3D illustre un exemple de la relation entre la tension et le flux d'un moteur asynchrone à vitesse constante. On en déduit que, pour éviter que la tension du moteur $U_m$ soit supérieure à la tension limite $U_{lim}$ avec une vitesse constante, il suffit de réduire la valeur du flux.

La phase d'identification des valeurs de flux peut être mise en oeuvre selon différents modes de réalisation. Les figures 2 et 4 illustrent deux modes de réalisation distincts. Sur ces deux figures, les blocs fonction qui permettent de mettre en oeuvre la phase d'identification sont inclus dans le bloc grisé.

Dans ces deux modes de réalisation, la phase d'identification consiste à balayer toute une plage de pulsation suivant une trajectoire de pulsation. L'unité de traitement UC exécute un module M5 de trajectoire de pulsation pour faire prendre à la pulsation $\omega_s$ plusieurs valeurs successives. Comme représenté sur la figure 3A, il s'agit par exemple d'un profil en escalier suivi par la pulsation $\omega_s$, chaque marche de l'escalier représentant une valeur distincte prise la pulsation $\omega_s$, pendant une durée déterminée.

Pour chacune des valeurs prises ainsi par la pulsation $\omega_s$, l'unité de traitement UC va déterminer la valeur de flux $|\phi|$ pour laquelle la tension du moteur $U_m$ est égale à la valeur seuil prédéfinie, c'est-à-dire égale à la valeur $U_{max}$.

En référence à la figure 2, selon le premier mode de réalisation, l'unité de traitement met en oeuvre les étapes suivantes :

- Pour chaque valeur de pulsation $\omega_s = \omega_i$ (avec i compris entre 1 et N) qui suit la trajectoire de pulsation générée par le module M5 appliqué en entrée, l'unité de traitement UC exécute un module M6 de trajectoire de flux permettant de faire varier la référence de flux entre deux valeurs extrêmes, c'est-à-dire entre une valeur de flux minimale et une valeur de flux maximale. Le profil de variation du flux entre les deux valeurs extrêmes et pour chaque valeur de référence de vitesse est représenté sur la figure 3B. On a ainsi :

$$\Phi_{min} < |\overline{\Phi}| < \Phi_{max}$$

- Pour chaque valeur de pulsation $\omega_i$ et pour chaque valeur prise par la référence de flux, l'unité de traitement UC détermine la tension du moteur $U_m$. Pour cela, elle exécute le module M1 calculateur de tension évoqué ci-dessus.
- L'unité de traitement UC obtient ainsi un profil de variation de tension en fonction de la référence de flux appliquée en entrée, à pulsation constante. Un tel profil est représenté sur la figure 3D.
- A partir du profil de variation de tension ainsi obtenu, l'unité de traitement UC détermine ensuite pour quelle valeur de la référence de flux appliquée en entrée, la tension du moteur $U_m$ est égale à la valeur seuil définie, c'est-à-dire à la valeur $U_{max}$. Pour cela, il s'agit juste d'exécuter un module M7 pour déterminer l'intersection entre la constante définie par $U_{max}$ et la courbe de variation de la tension. La figure 3B montre ainsi, pour chaque valeur prise par la pulsation $\omega_s = \omega_i$, la valeur de la référence de flux pour laquelle la tension du moteur est égale à la valeur seuil $U_{max}$. Toute méthode de détermination adaptée peut bien entendu être envisagée.
- Pour chaque valeur de la référence de vitesse, l'unité de traitement UC mémorise (M10) la valeur de la référence de flux pour laquelle la tension du moteur est égale à la valeur seuil $U_{max}$.

L'unité de traitement met en oeuvre ces différentes étapes pour les N valeurs prises par la pulsation, sur toute la plage, tel que :

$$\omega_{min} < \omega_s < \omega_{max}$$

En référence à la figure 4, selon le deuxième mode de réalisation, l'unité de traitement UC met en oeuvre les étapes suivantes :

- Pour chaque valeur de pulsation $\omega_s = \omega_i$ (avec i compris entre 1 et N) appliquée en référence, l'unité de traitement UC applique en entrée une référence de flux $\overline{\phi}$ fixée à une valeur déterminée (par exemple de manière arbitraire).
- En fonction de la valeur de la pulsation $\omega_i$ et de la valeur de la référence de flux $\overline{\phi}$ appliquées en entrée, l'unité de traitement UC détermine la tension du moteur $U_m$ dans le module M1 calculateur de tension.
- L'unité de traitement UC met en oeuvre un module de comparaison M8 entre la valeur de la tension du moteur $U_m$ calculée et la valeur seuil $U_{max}$.
- La différence entre les deux tensions est injectée dans un régulateur à action proportionnelle intégrale M9 pour corriger la valeur de la référence de flux appliquée en entrée.
- La boucle de régulation est mise en oeuvre jusqu'à ce que la tension du moteur $U_m$ soit à une valeur égale à la valeur seuil $U_{max}$.
- Lorsque l'égalité est atteinte, l'unité de traitement UC mémorise (M10) la valeur de la référence de flux correspondante qui est appliquée en entrée.

Dans ce deuxième mode de réalisation, les différentes étapes sont également mises en oeuvre par l'unité de traitement pour les N valeurs prises par la référence de vitesse, sur toute la plage, tel que :

$$\omega_{min} < \omega_s < \omega_{max}$$

A l'issue de la phase d'identification, mise en oeuvre selon l'un ou l'autre des modes de réalisation décrit ci-dessus, on obtient N couples de $(\omega_i, |\overline{\Phi}_i|)$ tels que $i$ = 1,2,3 ...N. Ces valeurs constituent une courbe $|\overline{\Phi}| = f(\omega_s)$ telle que représentée sur la figure 5. Si le flux du moteur électrique est au-dessous de cette courbe alors le moteur électrique n'atteint pas la limitation de tension.

A la fin de la phase d'identification, les valeurs obtenues de $(\omega_i, |\overline{\Phi}_i|)$ avec $i$ = 1,2,3 ...N sont stockées dans la mémoire de l'unité de traitement UC. Ces valeurs sont destinées à être employées pendant le fonctionnement du moteur, lors de la phase d'exploitation, pour adapter la valeur du flux en temps réel en fonction de la pulsation demandée en entrée, afin d'éviter la limitation de tension.

Lors du fonctionnement normal, le profil de flux peut être implémenté sous différentes formes :

- A partir d'une table mémorisée. Les N couples de $(\omega_i, |\overline{\Phi_i}|)$ peuvent être mémorisés sous la forme d'une table à laquelle se réfère l'unité de traitement UC pour vérifier que le couple, qui inclut la référence de vitesse et la référence de flux, appliqué en entrée se situe bien en dessous du profil déterminé et pour adapter en temps réel la valeur de la référence de flux à la valeur mémorisée si la pulsation $\omega_s$ demandée dépasse un certain seuil.

- A partir d'une fonction rationnelle paramétrique où les paramètres de cette fonction sont estimés à partir des points déjà identifiées (par interpolation). Vu le profil de la courbe représentée sur la figure 5, l'interpolation est par exemple réalisée à partir d'une hyperbole, telle que définie par l'expression suivante :

$$|\overline{\Phi}| = \begin{cases} \dfrac{\Phi_n}{\alpha\left(\left|\dfrac{\omega_s}{\omega_n}\right| - x_O\right) + 1} & \text{si} & \left|\dfrac{\omega_s}{\omega_n}\right| > x_O \\[4mm] \Phi_n & \text{si} & \left|\dfrac{\omega_s}{\omega_n}\right| \le x_O \end{cases}$$

Dans laquelle :

- $\Phi_n$ est le flux nominal.

- $\omega_n$ est la pulsation nominale.

- $\alpha$ et $x_O$ sont des constantes et sont interpolées à partir des données de la courbe de la figure 5.

La méthode décrite ci-dessus sera valable quelle que soit la loi de commande employée, cette méthode consistant de manière générale à former N couples de $(\omega_i, |\overline{\Phi_i}|)$ tels que $i = 1,2,3 \dots N$ pour lesquels la tension du moteur est égale à la valeur seuil définie par $U_{max}$.

La solution de l'invention présente ainsi de nombreux avantages, listés ci-dessous :

- Elle est simple à mettre en oeuvre car elle ne nécessite pas de moyens supplémentaires.

- Elle peut être mise en oeuvre pour la commande d'un moteur électrique asynchrone, quel que soit le type de commande appliqué à ce moteur.

- Elle est fiable et permet d'éviter de manière certaine le fonctionnement en limitation de tension en cas de défluxage et ainsi les perturbations dynamiques transitoires sur les grandeurs mécaniques du moteur qui peuvent en découler.

**Revendications**

1. Procédé de commande d'un moteur électrique (M) asynchrone, mis en oeuvre dans une unité de traitement, ladite unité de traitement étant associée à un convertisseur de puissance connecté par des phases de sortie (a, b, c) audit moteur électrique (M) et agencée pour exécuter une loi de commande en vue de déterminer des tensions à appliquer audit moteur électrique à partir d'une référence de vitesse et d'une référence de flux appliquées en entrée, **caractérisé en ce qu'**il comporte une phase d'identification qui consiste à :

   - Générer une trajectoire de vitesse en entrée de la loi de commande de manière à faire prendre à la référence de vitesse plusieurs valeurs successives déterminées,
   - Pour chaque valeur prise par la référence de vitesse, déterminer la tension ($U_m$) aux bornes du moteur électrique (M),
   - Pour chaque valeur prise par la référence de vitesse, déterminer et mémoriser la valeur de flux pour laquelle la tension aux bornes du moteur électrique est égale à une valeur seuil déterminée ($U_{max}$).

2. Procédé de commande selon la revendication 1, **caractérisé en ce que** la trajectoire de vitesse suit un profil en escalier, dont chaque échelon correspond à une valeur distincte à appliquer.

**3.** Procédé de commande selon la revendication 1 ou 2, **caractérisé en ce que** pour chaque valeur prise par la référence de vitesse, il consiste à :

- Faire varier la référence de flux entre une valeur minimale et une valeur maximale,
- Déterminer la courbe de variation de la tension du moteur ($U_m$) obtenue lors de la variation de la référence de flux,
- Déterminer la valeur de référence de flux pour laquelle la tension du moteur est égale à ladite valeur seuil ($U_{max}$).

**4.** Procédé de commande selon la revendication 3, **caractérisé en ce qu'**il consiste à déterminer l'intersection entre la constante formée par ladite valeur seuil ($U_{max}$) et la courbe de variation de la tension du moteur ($U_m$) obtenue lors de la variation de la référence de flux à une référence de vitesse donnée.

**5.** Procédé de commande selon la revendication 1 ou 2, **caractérisé en ce que** pour chaque valeur prise par la référence de vitesse, il consiste à :

- Fixer la référence de flux à une valeur déterminée,
- Déterminer la tension du moteur obtenue en fonction de ladite valeur de la référence de vitesse et de ladite de référence de flux appliquées en entrée,
- Déterminer la différence de tension entre la tension du moteur obtenue et ladite valeur seuil,
- Corriger la valeur de référence de flux appliquée en entrée jusqu'à ce que la tension du moteur soit égale à ladite valeur seuil ($U_{max}$),
- Mémoriser la valeur de référence de flux obtenue lorsque la tension du moteur est égale à ladite valeur seuil ($U_{max}$).

**6.** Procédé de commande selon l'une des revendication 1 à 5, **caractérisé en ce qu'**il comporte une phase d'exploitation qui suit la phase d'identification et dans laquelle chaque valeur de flux mémorisée en liaison avec chaque référence de vitesse lors de la phase d'identification peut être employée pour adapter le flux en temps réel lors de l'exécution de la loi de commande du moteur électrique.

**7.** Système de commande d'un moteur électrique (M), comprenant une unité de traitement, ladite unité de traitement étant associée à un convertisseur de puissance connecté par des phases de sortie (a, b, c) audit moteur électrique (M) et agencé pour appliquer des tensions variables audit moteur électrique en exécutant une loi de commande, **caractérisé en ce que** lors d'une phase d'identification, il exécute :

- Un module (M5) de génération d'une trajectoire de vitesse en entrée de la loi de commande de manière à faire prendre à la référence de vitesse plusieurs valeurs successives déterminées,
- Pour chaque valeur prise par la référence de vitesse, un module (M1) de détermination de la tension ($U_m$) aux bornes du moteur électrique (M),
- Pour chaque valeur prise par la référence de vitesse, un module (M7, M9) de détermination de la valeur de flux pour laquelle la tension aux bornes du moteur électrique est égale à une valeur seuil déterminée ($U_{max}$) et un module de mémorisation (10) de ladite valeur de flux déterminée.

**8.** Système selon la revendication 7, **caractérisé en ce que** la trajectoire de vitesse générée par le module (M5) de génération de trajectoire suit un profil en escalier, dont chaque échelon correspond à une valeur distincte à appliquer.

**9.** Système selon la revendication 7 ou 8, **caractérisé en ce que** pour chaque valeur prise par la vitesse de référence, il exécute :

- Un module (M6) de génération d'une trajectoire de référence de flux entre une valeur minimale et une valeur maximale,
- Un module (M1) de détermination d'une courbe de variation de la tension du moteur ($U_m$) lors de la variation de la référence de flux,
- Un module de détermination de la valeur de référence du flux pour laquelle la tension du moteur est égale à ladite valeur seuil ($U_{max}$).

**10.** Système selon la revendication 9, **caractérisé en ce que** ledit module de détermination de la valeur de référence de flux est agencé pour déterminer l'intersection entre la constante formée par ladite valeur seuil ($U_{max}$) et la courbe de variation de la tension du moteur ($U_m$) obtenue lors de la variation de la référence de flux à une référence de vitesse donnée.

**11.** Système selon la revendication 5 ou 6, **caractérisé en ce que** pour chaque valeur prise par la référence de vitesse, il fixe la référence de flux à une valeur déterminée et il exécute :

- Un module (M1) de détermination de la tension du moteur obtenue en fonction de ladite valeur de référence de vitesse et de ladite valeur de référence de flux appliquées en entrée,
- Un module (M8) de détermination de la différence de tension entre la tension du moteur obtenue et ladite valeur seuil,
- Un module (M9) pour déterminer une correction à appliquer à la valeur de la référence de flux appliquée en entrée jusqu'à ce que la tension du moteur soit égale à ladite valeur seuil ($U_{max}$),
- Un module (M10) de mémorisation de la valeur de référence de flux obtenue lorsque la tension du moteur est égale à ladite valeur seuil ($U_{max}$).

**12.** Système selon l'une des revendication 7 à 11, **caractérisé en ce que** lors d'une phase d'exploitation qui suit la phase d'identification, il est agencé pour adapter le flux en temps réel lors de l'exécution de la loi de commande du moteur électrique à partir des valeurs de flux mémorisées en liaison avec les références de vitesse lors de la phase d'identification.

**Patentansprüche**

**1.** Steuerungsverfahren eines asynchronen Elektromotors (M), das in einer Bearbeitungseinheit eingesetzt wird, wobei die Bearbeitungseinheit einem Stromrichter zugeordnet ist, der durch Ausgangsphasen (a, b, c) an den Elektromotor (M) angeschlossen und eingerichtet ist, um ein Steuerungsgesetz auszuführen, um Spannungen, die an den Elektromotor anzulegen sind, auf Basis einer Geschwindigkeitsreferenz und einer Flussreferenz, die am Eingang angelegt werden, zu bestimmen, **dadurch gekennzeichnet, dass** es eine Identifizierungsphase umfasst, darin bestehend:

- eine Geschwindigkeitsbahn am Eingang des Steuerungsgesetzes zu erzeugen, um die Geschwindigkeitsreferenz mehrere bestimmte aufeinanderfolgende Werte annehmen zu lassen,
- für jeden von der Geschwindigkeitsreferenz angenommenen Wert die Spannung ($U_m$) an den Klemmen des Elektromotors (M) zu bestimmen,
- für jeden von der Geschwindigkeitsreferenz angenommenen Wert den Flusswert zu bestimmten und zu speichern, bei dem die Spannung an den Klemmen des Elektromotors gleich einem bestimmten Grenzwert ($U_{max}$) ist.

**2.** Steuerungsverfahren nach Anspruch 1, **dadurch gekennzeichnet, dass** die Geschwindigkeitsbahn einem Stufenprofil folgt, wobei jede Stufe einem unterschiedlichen anzulegenden Wert entspricht.

**3.** Steuerungsverfahren nach Anspruch 1 oder 2, **dadurch gekennzeichnet, dass** es für jeden von der Geschwindigkeitsreferenz angenommenen Wert darin besteht:

- die Flussreferenz zwischen einem Mindestwert und einem Höchstwert variieren zu lassen,
- die Variationskurve der Spannung des Motors ($U_m$), die bei der Variation der Flussreferenz erhalten wird, zu bestimmen,
- den Flussreferenzwert zu bestimmen, bei dem die Spannung des Motors gleich dem Grenzwert ($U_{max}$) ist.

**4.** Steuerungsverfahren nach Anspruch 3, **dadurch gekennzeichnet, dass** es darin besteht, den Schnittpunkt zwischen der von dem Grenzwert ($U_{max}$) gebildeten Konstante und der Variationskurve der Spannung des Motors ($U_m$), die bei der Variation der Flussreferenz bei einer gegebenen Geschwindigkeitsreferenz erhalten wird, zu bestimmen.

**5.** Steuerungsverfahren nach Anspruch 1 oder 2, **dadurch gekennzeichnet, dass** es für jeden von der Geschwindigkeitsreferenz angenommenen Wert darin besteht:

- die Flussreferenz auf einen bestimmten Wert festzusetzen,
- die Spannung des Motors zu bestimmen, die in Abhängigkeit von dem Wert der Geschwindigkeitsreferenz und der Flussreferenz, die am Eingang angelegt werden, erhalten wird,
- die Spannungsdifferenz zwischen der erhaltenen Spannung des Motors und dem Grenzwert zu bestimmen,
- den am Eingang angelegten Flussreferenzwert zu korrigieren, bis die Spannung des Motors gleich dem Grenzwert ($U_{max}$) ist,

- den erhaltenen Flussreferenzwert, wenn die Spannung des Motors gleich dem Grenzwert ($U_{max}$) ist, zu speichern.

6. Steuerungsverfahren nach einem der Ansprüche 1 bis 5, **dadurch gekennzeichnet, dass** es eine Auswertungsphase umfasst, die auf die Identifizierungsphase folgt und in der jeder bei der Identifizierungsphase in Verbindung mit jeder Geschwindigkeitsreferenz gespeicherte Flusswert eingesetzt werden kann, um den Echtzeitfluss bei der Ausführung des Steuerungsgesetzes des Elektromotors anzupassen.

7. Steuerungssystem eines Elektromotors (M), umfassend eine Bearbeitungseinheit, wobei die Bearbeitungseinheit einem Stromrichter zugeordnet ist, der durch Ausgangsphasen (a, b, c) an den Elektromotor (M) angeschlossen und eingerichtet ist, um variable Spannungen an den Elektromotor anzulegen, wobei ein Steuerungsgesetz ausgeführt wird, **dadurch gekennzeichnet, dass** es während einer Identifizierungsphase ausführt:

- ein Modul (M5) zur Erzeugung einer Geschwindigkeitsbahn am Eingang des Steuerungsgesetzes, um die Geschwindigkeitsreferenz mehrere bestimmte aufeinanderfolgende Werte annehmen zu lassen,
- für jeden von der Geschwindigkeitsreferenz angenommenen Wert ein Modul (M1) zur Bestimmung der Spannung ($U_m$) an den Klemmen des Elektromotors (M),
- für jeden von der Geschwindigkeitsreferenz angenommenen Wert ein Modul (M7, M9) zur Bestimmung des Flusswerts, bei dem die Spannung an den Klemmen des Elektromotors gleich einem bestimmten Grenzwert ($U_{max}$) ist, und ein Modul zur Speicherung (M10) des bestimmten Flusswerts.

8. System nach Anspruch 7, **dadurch gekennzeichnet, dass** die von dem Modul (M5) zur Erzeugung einer Bahn erzeugte Geschwindigkeitsbahn einem Stufenprofil folgt, wobei jede Stufe einem unterschiedlichen anzulegenden Wert entspricht.

9. System nach Anspruch 7 oder 8, **dadurch gekennzeichnet, dass** es für jeden von der Referenzgeschwindigkeit angenommenen Wert ausführt:

- ein Modul (M6) zur Erzeugung einer Flussreferenzbahn zwischen einem Mindestwert und einem Höchstwert,
- ein Modul (M1) zur Bestimmung einer Variationskurve der Spannung des Motors ($U_m$) bei der Variation der Flussreferenz,
- ein Modul zur Bestimmung des Referenzwerts des Flusses, bei dem die Spannung des Motors gleich dem Grenzwert ($U_{max}$) ist.

10. System nach Anspruch 9, **dadurch gekennzeichnet, dass** das Modul zur Bestimmung des Flussreferenzwerts eingerichtet ist, um den Schnittpunkt zwischen der von dem Grenzwert ($U_{max}$) gebildeten Konstante und der Variationskurve der Spannung des Motors ($U_m$), die bei der Variation der Flussreferenz bei einer gegebenen Geschwindigkeitsreferenz erhalten wird, zu bestimmen.

11. System nach Anspruch 5 oder 6, **dadurch gekennzeichnet, dass** es für jeden von der Geschwindigkeitsreferenz angenommenen Wert die Flussreferenz auf einem bestimmten Wert festsetzt und ausführt:

- ein Modul (M1) zur Bestimmung der Spannung des Motors, die in Abhängigkeit von dem Geschwindigkeitsreferenzwert und dem Flussreferenzwert, die am Eingang angelegt werden, erhalten wird,
- ein Modul (M8) zur Bestimmung der Spannungsdifferenz zwischen der erhaltenen Spannung des Motors und dem Grenzwert,
- ein Modul (M9), um eine an den an den Eingang angelegten Flussreferenzwert anzulegende Korrektur, bis die Spannung des Motors gleich dem Grenzwert ($U_{max}$) ist, zu bestimmen,
- ein Modul (M10) zur Speicherung des erhaltenen Flussreferenzwerts, wenn die Spannung des Motors gleich dem Grenzwert ($U_{max}$) ist.

12. System nach einem der Ansprüche 7 bis 11, **dadurch gekennzeichnet, dass** es bei einer Auswertungsphase, die auf die Identifizierungsphase folgt, eingerichtet ist, um den Eichzeitfluss bei der Ausführung des Steuerungsgesetzes des Elektromotors auf Basis der in Verbindung mit den Geschwindigkeitsreferenzen in der Identifizierungsphase gespeicherten Flusswerte anzupassen.

**Claims**

1. Method for controlling an asynchronous electrical motor (M), implemented in a processing unit, said processing unit being associated with a power converter connected by output phases (a, b, c) to said electrical motor (M) and disposed to execute a control law for the purpose of determining voltages to be applied to said electrical motor based on a speed reference and a flux reference applied in input, **characterized in that** it includes an identification phase, which consists in:

   • Generating a speed trajectory in input of the control law in order to make the speed reference take several determined successive values,
   • For each value taken by the speed reference, determining the voltage ($U_m$) at the terminals of the electrical motor (M),
   • For each value taken by the speed reference, determining and storing the flux value for which the voltage at the terminals of the electrical motor is equal to a determined threshold value ($U_{max}$).

2. Control method according to Claim 1, **characterized in that** the speed trajectory follows a profile as a staircase, each step of which corresponds to a distinct value to be applied.

3. Control method according to Claim 1 or 2, **characterized in that** for each value taken by the speed reference, it consists in:

   • Making the flux reference vary between a minimum value and a maximum value,
   • Determining the curve of variation of the motor voltage ($U_m$) obtained when the flux reference varies,
   • Determining the flux reference value for which the motor voltage is equal to said threshold value ($U_{max}$).

4. Control method according to Claim 3, **characterized in that** it consists in determining the intersection between the constant formed by said threshold value ($U_{max}$) and the curve of variation of the motor voltage ($U_m$) obtained when the flux reference varies at a given speed reference.

5. Control method according to Claim 1 or 2, **characterized in that** for each value taken by the speed reference, it consists in:

   • Fixing the flux reference at a determined value,
   • Determining the motor voltage obtained as a function of said speed reference value and said flux reference, both applied in input,
   • Determining the voltage difference between the motor voltage obtained and said threshold value,
   • Correcting the flux reference value applied in input until the motor voltage is equal to said threshold value ($U_{max}$),
   • Storing the flux reference value obtained when the motor voltage is equal to said threshold value ($U_{max}$).

6. Control method according to one of Claims 1 to 5, **characterized in that** it includes an operating phase that follows the identification phase and in which each flux value stored in conjunction with each speed reference during the identification phase can be used to adjust the flux in real time when the control law of the electrical motor is executed.

7. Control system for an electrical motor (M) comprising a processing unit, said processing unit being associated with a power converter connected by output phases (a, b, c) to said electrical motor (M) and disposed to apply variable voltages to said electrical motor while executing a control law, **characterized in that**, during an identification phase, it executes:

   • A module (M5) for generating a speed trajectory in input of the control law so as to make the speed reference take several determined successive values,
   • For each value taken by the speed reference, a module (M1) for determining the voltage ($U_m$) at the terminals of the electrical motor (M),
   • For each value taken by the speed reference, a module (M7, M9) for determining the flux value for which the voltage at the terminals of the electrical motor is equal to a determined threshold value ($U_{max}$), and a module (M10) for storing said determined flux value.

8. System according to Claim 7, **characterized in that** the speed trajectory generated by the module (M5) for generating a trajectory follows a profile as a staircase, each step of which corresponds to a distinct value to be applied.

9. System according to Claim 7 or 8, **characterized in that** for each value taken by the speed reference, it executes:

   • A module (M6) for generating a flux reference trajectory between a minimum value and a maximum value,
   • A module (M1) for determining a curve of variation of the motor voltage ($U_m$) when the flux reference varies,
   • A module for determining the flux reference value for which the motor voltage is equal to said threshold value ($U_{max}$).

10. System according to Claim 9, **characterized in that** said module for determining the flux reference value is disposed to determine the intersection between the constant formed by said threshold value ($U_{max}$) and the curve of variation of the motor voltage ($U_m$) obtained when the flux reference varies at a given speed reference.

11. System according to Claim 5 or 6, **characterized in that** for each value taken by the speed reference, it fixes the flux reference at a determined value and executes:

   • A module (M1) for determining the motor voltage obtained as a function of said speed reference value and said flux reference value, both applied in input,
   • A module (M8) for determining the voltage difference between the motor voltage obtained and said threshold value,
   • A module (M9) for determining a correction to be applied to the flux reference value applied in input until the motor voltage is equal to said threshold value ($U_{max}$),
   • A module (M10) for storing the flux reference value obtained when the motor voltage is equal to said threshold value ($U_{max}$).

12. System according to one of Claims 7 to 11, **characterized in that** during an operating phase that follows the identification phase, it is disposed to adjust the flux in real time when the control law of the electrical motor is executed on the basis of flux values stored in conjunction with the speed references during the identification phase.

**Fig. 1**

**Fig. 2**

**Fig. 3A**

**Fig. 3B**

**Fig. 3C**

## Fig. 3D

## Fig. 4

*Fig. 5*

$\omega_S$ en % de vitesse nominale

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5204607 A
- US 7221117 B